# EUROPEAN PATENT APPLICATION

(11) **EP 4 528 877 A1**
(43) Date of publication of application: **26.03.2025**
(21) Application number: 23846861.5
(22) Date of filing: 07.07.2023
(51) Int. Cl.: H01M 10/0567, H01M 10/0569, H01M 10/42, H01M 10/052, H01M 4/38

(54) **ELECTROLYTE FOR LITHIUM-SULFUR BATTERY AND LITHIUM-SULFUR BATTERY INCLUDING SAME**

(30) Priority: 26.07.2022 KR 20220092802
(71) Applicant: LG Energy Solution, Ltd., Seoul 07335 (KR)
(72) Inventor: JANG, Eun-Ji, Daejeon 34122 (KR); KANG, Da-Young, Daejeon 34122 (KR); KIM, Myeong-Seong, Daejeon 34122 (KR); KIM, Yun-Jung, Daejeon 34122 (KR); AHN, Ji-Hoon, Daejeon 34122 (KR); LEE, Mi-Jin, Daejeon 34122 (KR); LEE, Jong-Yoon, Daejeon 34122 (KR); LEE, Hyun-Soo, Daejeon 34122 (KR); LEE, Chang-Hoon, Daejeon 34122 (KR)
(74) Representative: Goddar, Heinz J.
(86) International application number: PCT/KR2023/009703
(87) International publication number: WO 2024/025202

(57) **Abstract**

The present disclosure relates to an electrolyte for a lithium-sulfur battery and a lithium-sulfur battery including the same. The electrolyte for a lithium-sulfur battery includes a nonaqueous solvent, a lithium salt, a nitrate salt and an aryl derivative, wherein the nonaqueous solvent includes: a heterocyclic compound containing one oxygen (O) atom or sulfur (S) atom in its cyclic structure; and glycol ether, and the aryl derivative includes at least one of the compounds represented by the following Chemical Formula 1 to Chemical Formula 4:

[Chemical Formula 1] R¹-M₁-Li

[Chemical Formula 2] R²-M₂-M₃-R³

[Chemical Formula 3] R⁴-M₄-Sx-Li

[Chemical Formula 4] R⁵-M₅-Sx-M₆-R⁶

## Description

### TECHNICAL FIELD

The present disclosure relates to an electrolyte for a lithium-sulfur battery and a lithium-sulfur battery including the same.

The present application claims priority to Korean Patent Application No. 10-2022-0092802 filed on July 26, 2022 in the Republic of Korea, the disclosures of which are incorporated herein by reference.

### BACKGROUND ART

A lithium-sulfur battery is a battery system using a sulfur-based material having a sulfur-sulfur (S-S) bond as a positive electrode active material and a lithium metal as a negative electrode active material. Sulfur as a main ingredient of the positive electrode active material is advantageous in that it is rich in resources all over the world, has no toxicity and shows a low atomic weight.

As the spectrum of application of secondary batteries is extended to electric vehicles (EVs), energy storage systems (ESSs), or the like, the technology of lithium sulfur batteries capable of realizing a theoretically higher energy storage density per weight (~2,600 Wh/kg), as compared to lithium-ion secondary batteries having a relatively lower energy storage density per weight (~250 Wh/kg), has been spotlighted.

**In** the lithium-sulfur battery, during discharge, while lithium as a negative electrode active material donates an electron and is ionized and oxidized into a lithium cation, a sulfur-based material as a positive electrode active material accepts the electron and is reduced. Herein, the S-S bond accepts two electrons through the reduction of the sulfur-based material and is converted into a sulfur anion form. The lithium cation produced by the oxidation of lithium is transferred to a positive electrode through an electrolyte, and is bound with the sulfur anion produced by the reduction of the sulfur-based compound to form a salt. Particularly, sulfur before discharge has a cyclic S₈ structure, which is converted into lithium polysulfide (Li₂Sₓ) through the reduction and is reduced completely to produce lithium sulfide (Li₂S).

Herein, it is difficult for the sulfur-based compound used as a positive electrode active material to ensure the reactivity with electrons and lithium ions in its solid state due to the low electrical conductivity of sulfur. Therefore, there has been developed a technology of inducing a liquid-phase reaction and improving the reactivity by producing an intermediate polysulfide in the form of Li₂Sₓ in order to improve the reactivity of sulfur in a lithium-sulfur battery. Such a technology uses an ether-based solvent, such as dioxolane or dimethoxyethane (DME) having high solubility to lithium polysulfide, as an electrolyte solvent. As a result, the reactivity of sulfur and battery life are affected by the content of electrolyte.

In addition, during the discharge of a lithium-sulfur battery, polysulfide (PS) produced from the positive electrode is eluted to the electrolyte and undergoes reaction, but such polysulfide causes side reactions in the battery, resulting in deterioration of the battery. It is important to reduce the amount of electrolyte in order to realize a high-energy density cell. However, when reducing the amount of electrolyte, the concentrate of polysulfide is increased to accelerate side reactions and to cause degradation of the battery life. Therefore, there is a need for realizing high energy density, while ensuring a certain amount of electrolyte.

### DISCLOSURE

### Technical Problem

The present disclosure is designed to solve the problems of the related art, and therefore the present disclosure is directed to providing a lithium-sulfur battery having improved discharge capacity.

For this purpose, the present disclosure is directed to providing an electrolyte for a lithium-sulfur battery which improves a problem caused by elution of polysulfide, such as resistance characteristics, by varying the reaction path of sulfur (S) to control the elution characteristics of polysulfide (PS).

The present disclosure is also directed to providing a lithium-sulfur battery using a suitable amount of electrolyte and having high energy density and life characteristics.

### Technical Solution

**In** one aspect of the present disclosure, there is provided an electrolyte for a lithium-sulfur battery according to any one of the following embodiments.

According to the first embodiment of the present disclosure, there is provided an electrolyte for a lithium-sulfur battery, including a nonaqueous solvent, a lithium salt, a nitrate salt and an aryl derivative,
wherein the nonaqueous solvent includes: a heterocyclic compound containing one oxygen (O) atom or sulfur (S) atom in its cyclic structure; and glycol ether, and
the aryl derivative includes at least one of the compounds represented by the following Chemical Formula 1 to Chemical Formula 4:

   [Chemical Formula 1] R¹-M₁-Li

   [Chemical Formula 2] R²-M₂-M₃-R³

   [Chemical Formula 3] R⁴-M₄-Sx-Li

   [Chemical Formula 4] R⁵-M₅-Sx-M₆-R⁶,
wherein each of M₁, M₂, M₃, M₄, M₅ and M₆ is independently selected from selenium (Se) and tellurium (Te),
each of R¹, R², R³, R⁴, R⁵ and R⁶ independently represents a C6-C20 aryl group, and
X represents a number of 1-8.

According to the second embodiment of the present disclosure, there is provided the electrolyte for a lithium-sulfur battery as defined in the first embodiment, wherein each of M₁, M₂, M₃, M₄, M₅ and M₆ in Chemical Formula 1 to Chemical Formula 4 represents selenium (Se).

According to the third embodiment of the present disclosure, there is provided the electrolyte for a lithium-sulfur battery as defined in the first or the second embodiment, wherein the nitrate salt includes an alkali metal as a cation.

According to the fourth embodiment of the present disclosure, there is provided the electrolyte for a lithium-sulfur battery as defined in any one of the first to the third embodiments, wherein the nitrate salt includes lithium nitrate (LiNO₃).

According to the fifth embodiment of the present disclosure, there is provided the electrolyte for a lithium-sulfur battery as defined in any one of the first to the fourth embodiments, wherein the sum of the weight of the nitrate salt and the weight of the aryl derivative is 4 wt% or more based on the total weight of the electrolyte for a lithium-sulfur battery.

According to the sixth embodiment of the present disclosure, there is provided the electrolyte for a lithium-sulfur battery as defined in any one of the first to the fifth embodiments, wherein the weight of the aryl derivative is equal to or smaller than the weight of the nitrate salt.

According to the seventh embodiment of the present disclosure, there is provided the electrolyte for a lithium-sulfur battery as defined in any one of the first to the sixth embodiments, wherein the aryl derivative includes a compound represented by Chemical Formula 1, a compound represented by Chemical Formula 3 or a mixture thereof, and
the molar ratio of the compound represented by Chemical Formula 1, the compound represented by Chemical Formula 3 or a mixture thereof based on the nitrate salt is 0.5:1 or less.

According to the eighth embodiment of the present disclosure, there is provided the electrolyte for a lithium-sulfur battery as defined in any one of the first to the seventh embodiments, wherein the aryl derivative includes a compound represented by Chemical Formula 2, a compound represented by Chemical Formula 4 or a mixture thereof, and
the molar ratio of the compound represented by Chemical Formula 2, the compound represented by Chemical Formula 4 or a mixture thereof based on the nitrate salt is 0.2:1 or less.

According to the ninth embodiment of the present disclosure, there is provided the electrolyte for a lithium-sulfur battery as defined in any one of the first to the eighth embodiments, wherein the lithium salt includes LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate, lithium tetraphenylborate, lithium imide, or two or more of them.

According to the tenth embodiment of the present disclosure, there is provided the electrolyte for a lithium-sulfur battery as defined in any one of the first to the ninth embodiments, wherein the ratio of the total volume of the glycol ether based on the total volume of the heterocyclic compound is 3:1 or more.

According to the eleventh embodiment of the present disclosure, there is provided the electrolyte for a lithium-sulfur battery as defined in any one of the first to the tenth embodiments, wherein the heterocyclic compound includes furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-metylthiophene, 2-ethylthiophene, 2-propylthiophene, 2-butylthiophene, 2,3-dimethylthiophene, 2,4-dimethylthiophene, 2,5-dimethylthiophene, or two or more of them.

According to the twelfth embodiment of the present disclosure, there is provided the electrolyte for a lithium-sulfur battery as defined in any one of the first to the eleventh embodiments, wherein the nonaqueous solvent further includes an acyclic ether containing one oxygen atom.

According to the thirteenth embodiment of the present disclosure, there is provided the electrolyte for a lithium-sulfur battery as defined in any one of the first to the twelfth embodiments, wherein the acyclic ether is present in an amount of 10 vol% or less based on the total volume of the nonaqueous solvent.

According to the fourteenth embodiment of the present disclosure, there is provided the electrolyte for a lithium-sulfur battery as defined in any one of the first to the thirteenth embodiments, wherein the acyclic ether includes bis(2,2,2-trifluoroethyl)ether, methyl propyl ether, ethyl propyl ether, dipropyl ether, methyl t-butyl ether, methyl hexyl ether, ethyl t-butyl ether, ethyl hexyl ether, or two or more of them.

**In** another aspect of the present disclosure, there is provided a lithium-sulfur battery according to any one of the following embodiments.

According to the fifteenth embodiment of the present disclosure, there is provided a lithium-sulfur battery which includes the electrolyte for a lithium-sulfur battery as defined in any one of the first to the fourteenth embodiments, a positive electrode including a positive electrode active material, and a negative electrode including a negative electrode active material.

According to the sixteenth embodiment of the present disclosure, there is provided the lithium-sulfur battery as defined in the fifteenth embodiment, wherein the positive electrode active material includes inorganic sulfur (S₈), Li₂Sₙ (n ≥ 1), disulfide compound, organic sulfur compound, carbon-sulfur polymer ((C₂Sₓ)ₙ, x represents an integer of 2.5-50, n ≥ 2), or a mixture of two or more of them.

According to the seventeenth embodiment of the present disclosure, there is provided the lithium-sulfur battery as defined in the fifteenth or the sixteenth embodiment, wherein the ratio (E/S ratio) of the weight of the electrolyte for a lithium-sulfur battery based on the weight of the positive electrode active material is 2 g/g or more.

According to the eighteenth embodiment of the present disclosure, there is provided the lithium-sulfur battery as defined in any one of the fifteenth to the seventeenth embodiment, wherein the E/S ratio is 2.3 g/g or more.

### Advantageous Effects

The electrolyte for a lithium-sulfur battery according to an embodiment of the present disclosure causes a change in reduction path of lithium sulfide, resulting in a change in the discharge mechanism of a lithium-sulfur battery.

**In** this manner, the lithium-sulfur battery using the electrolyte for a lithium-sulfur battery according to an embodiment of the present disclosure realizes additional capacity and thus provides the effects of increasing the discharge capacity of the battery and realizing high energy density.

### BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the term 'polysulfide (PS)' has a concept covering 'polysulfide ion (Sₓ²⁻, wherein x is an integer of 2-8)' and 'lithium polysulfide (Li₂Sₓ or Li₂Sₓ⁻, wherein x is an integer of 2-8)' .

As used herein, the term 'lithium sulfide' refers to Li₂S.

In one aspect of the present disclosure, there is provided an electrolyte for a lithium-sulfur battery, including a nonaqueous solvent, a lithium salt, a nitrate salt and an aryl derivative,
wherein the nonaqueous solvent includes: a heterocyclic compound containing one oxygen (O) atom or sulfur (S) atom in its cyclic structure; and glycol ether, and
the aryl derivative includes at least one of the compounds represented by the following Chemical Formula 1 to Chemical Formula 4:

   [Chemical Formula 1] R¹-M₁-Li

   [Chemical Formula 2] R²-M₂-M₃-R³

   [Chemical Formula 3] R⁴-M₄-Sx-Li

   [Chemical Formula 4] R⁵-M₅-Sx-M₆-R⁶,
wherein each of M₁, M₂, M₃, M₄, M₅ and M₆ is independently selected from selenium (Se) and tellurium (Te),
each of R¹, R², R³, R⁴, R⁵ and R⁶ independently represents a C6-C20 aryl group, and
X represents a number of 1-8.

According to an embodiment of the present disclosure, the nonaqueous solvent is contained as a medium in the electrolyte for a lithium-sulfur battery. The lithium salt is contained as an electrolyte salt in the electrolyte for a lithium-sulfur battery. The nitrate salt is contained as an additive for forming a stable coating film on a negative electrode including lithium metal, or the like, and for improving charge/discharge efficiency. In addition, the aryl derivative is contained as an additive for causing a change in reduction path of lithium sulfide and for providing additional discharge capacity.

According to the present disclosure, when the aryl derivative is contained in the electrolyte for a lithium-sulfur battery, it may function to cause chain extension of lithium sulfide (Li₂S) present in the positive electrode or electrolyte, resulting in a change in reduction path of lithium sulfide.

Particularly, when the aryl derivative includes a compound represented by Chemical Formula 1, it may function to cause chain extension of lithium sulfide into the form of -M₁-R¹ in the electrolyte for a lithium-sulfur battery including the same compound.

In addition, when the aryl derivative includes a compound represented by Chemical Formula 2, M₂-M₃ bonding is cleaved to cause chain extension of lithium sulfide into the form of -M₂-R² or -M₃-R³ in the electrolyte for a lithium-sulfur battery including the same compound.

In addition, when the aryl derivative includes a compound represented by Chemical Formula 3, it may function to cause chain extension of lithium sulfide into the form of -Sₓ-M₄-R⁴ in the electrolyte for a lithium-sulfur battery including the same compound.

Further, when the aryl derivative includes a compound represented by Chemical Formula 4, it may function to cause chain extension of lithium sulfide into the form of -Sₓ-M₅-R⁵ and/or -Sₓ-M₆-R⁶ in the electrolyte for a lithium-sulfur battery including the same compound.

According to an embodiment of the present disclosure, each of M₁, M₂, M₃, M₄, M₅ and M₆ in Chemical Formula 1 to Chemical Formula 4 may be selenium (Se).

According to an embodiment of the present disclosure, each of R¹, R², R³, R⁴, R⁵ and R⁶ in Chemical Formula 1 to Chemical Formula 4 may be a phenyl group.

According to another embodiment of the present disclosure, the electrolyte for a lithium-sulfur battery may include diphenyl diselenide (PDSe) as an aryl derivative.

According to the present disclosure, the electrolyte for a lithium-sulfur battery includes a nitrate salt. Particularly, the nitrate salt generally refers to a nitrate-based compound or a nitrite-based compound that may be used as an additive in an electrolyte for a lithium-sulfur battery. For example, the nitrate-based compound or the nitrite-based compound may provide the effects of forming a stable coating film on a negative electrode including lithium metal, or the like, and improving charge/discharge efficiency, but the mechanism of the present disclosure is not limited thereto.

According to an embodiment of the present disclosure, particular examples of the nitrate salt may include, but are not limited to: inorganic nitrate-based or nitrite-based compounds, such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂), or the like; organic nitrate-based or nitrite-based compounds, such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite, or the like; organic nitro compounds, such as nitromethane, nitropropane, nitrobutane, nitrobenzene, dinitrobenzene, nitropyridine, dinitropyridine, nitritoluene, dinitritoluene, or the like; or a mixture of two or more of them.

According to an embodiment of the present disclosure, the cation of the nitrate salt may be selected from alkali metals, such as lithium, sodium, potassium, rubidium and cesium, but is not limited thereto.

According to another embodiment of the present disclosure, the nitrate salt may include lithium nitrate (LiNO₃).

According to an embodiment of the present disclosure, the sum of the weight of the nitrate salt and the weight of the aryl derivative may be 4 wt% or more based on the total weight of the electrolyte for a lithium-sulfur battery. Particularly, the sum of the weight of the nitrate salt and the weight of the aryl derivative may be 5-10 wt%, 5-9 wt%, or 5-7 wt%, based on the total weight of the electrolyte for a lithium-sulfur battery. When the sum of the weight of the nitrate salt and the weight of the aryl derivative falls within the above-defined range, it is possible to realize an advantageous effect in terms of an increase in discharge capacity during the operation of a lithium-sulfur battery using the electrolyte and improvement of life characteristics, but the scope of the present disclosure is not limited thereto.

According to another embodiment of the present disclosure, the weight of the aryl derivative may be equal to or smaller than the weight of the nitrate salt. Particularly, the weight of the aryl derivative may be smaller than the weight of the nitrate salt. When the weight ratio of the aryl derivative based on the nitrate salt satisfies the above-defined range, it is possible to realize an advantageous effect in terms of an increase in discharge capacity during the operation of a lithium-sulfur battery using the electrolyte and improvement of life characteristics, but the scope of the present disclosure is not limited thereto.

According to an embodiment of the present disclosure, when the aryl derivative includes a compound represented by Chemical Formula 1, a compound represented by Chemical Formula 3 or a mixture thereof, the molar ratio of the compound represented by Chemical Formula 1, the compound represented by Chemical Formula 3 or a mixture thereof based on the nitrate salt may be 0.5:1 or less. Particularly, the molar ratio of the compound represented by Chemical Formula 1, the compound represented by Chemical Formula 3 or a mixture thereof based on the nitrate salt may be 0.1:1-0.4:1, or 0.1:1-0.3:1. When the aryl derivative includes a mixture of a compound represented by Chemical Formula 1 with a compound represented by Chemical Formula 3, the molar ratio refers to the molar ratio of the mixture.

According to another embodiment of the present disclosure, when the aryl derivative includes a compound represented by Chemical Formula 2, a compound represented by Chemical Formula 4 or a mixture thereof, the molar ratio of the compound represented by Chemical Formula 2, the compound represented by Chemical Formula 4 or a mixture thereof based on the nitrate salt may be 0.2:1 or less. Particularly, the molar ratio of the compound represented by Chemical Formula 2, the compound represented by Chemical Formula 4 or a mixture thereof based on the nitrate salt may be 0.1:1 or less. For example, the molar ratio of the compound represented by Chemical Formula 2, the compound represented by Chemical Formula 4 or a mixture thereof based on the nitrate salt may be 0.05:1-0.2:1, or 0.05:1-0.1:1. When the aryl derivative includes a mixture of a compound represented by Chemical Formula 2 with a compound represented by Chemical Formula 4, the molar ratio refers to the molar ratio of the mixture.

When the molar ratio of the aryl derivative based on the nitrate salt satisfies the above-defined range, it is possible to realize an advantageous effect in terms of an increase in discharge capacity during the operation of a lithium-sulfur battery using the electrolyte and improvement of life characteristics, but the scope of the present disclosure is not limited thereto.

According to still another embodiment of the present disclosure, the ratio of the combined weight of the nitrate salt and the aryl derivative based on the total weight of the electrolyte for a lithium-sulfur battery may be 4 wt% or more, the weight of the aryl derivative may be equal to or smaller than the weight of the nitrate salt, and the molar ratio of the aryl derivative based on the nitrate salt may be 0.5:1 or less.

According to the present disclosure, the nonaqueous solvent includes a combination of a heterocyclic compound with glycol ether.

Herein, glycol ether is an acyclic ether containing two oxygen atoms, and any glycol ether may be used with no particular limitation, as long as it may be used as an electrolyte of a lithium-sulfur battery.

According to an embodiment of the present disclosure, the glycol ether may be represented by the following Chemical Formula 5:

[Chemical Formula 5] R⁷-O-(CH₂CH₂O)ₓ-R⁸

wherein R⁷ and R⁸ are the same or different, and each independently represents a substituted or non-substituted C1-C6 alkyl group, a substituted or non-substituted C6-C12 aryl group, or a substituted or non-substituted C7-C13 arylalkyl group, and x represents an integer of 0-4.

Particular examples of the glycol ether may include, but are not limited to: dimethoxyethane, diethoxyethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ether, or two or more of them.

According to an embodiment of the present disclosure, the nonaqueous solvent may include dimethoxyethane as glycol ether.

The heterocyclic compound is an ether containing one oxygen (O) atom or sulfur (S) atom in its cyclic structure and thus containing one -C-O-C structure or -C-S-C- structure in its cyclic structure, and any heterocyclic compound may be used with no particular limitation, as long as it may be used as an electrolyte of a lithium-sulfur battery.

According to an embodiment of the present disclosure, the heterocyclic compound includes two or more double bonds and any one of oxygen and sulfur atoms at the same time, and thus a solid electrolyte interface (SEI) layer is formed on the surface of a negative electrode (lithium-based metal) through the ring opening reaction of the heterocyclic compound in the initial discharge stage, thereby inhibiting formation of lithium dendrite. In addition, the heterocyclic compound reduces decomposition of the electrolyte on the lithium-based metal surface and side reactions caused thereby to improve the life characteristics of a lithium-sulfur battery. Further, since the heterocyclic compound has a difficulty in dissolving salt due to the delocalization of lone pair electrons of the hetero-atom (oxygen atom or sulfur atom), it may function to reduce the elution of polysulfide into the electrolyte. However, the scope of the present disclosure is not limited thereto.

According to an embodiment of the present disclosure, the heterocyclic compound essentially includes two or more double bonds in order to form an SEI layer on the surface of a negative electrode (lithium-based metal), as well as essentially includes a hetero-atom (oxygen atom or sulfur atom) in order to realize the effect of imparting polarity to increase the affinity with another solvent in the electrolyte, or the like.

According to an embodiment of the present disclosure, the heterocyclic compound may be a 4-membered to 15-membered, particularly 4-membered to 7-membered, more particularly 5-membered to 6-membered heterocyclic compound. In addition, the heterocyclic compound may be a heterocyclic compound non-substituted or substituted with at least one selected from the group consisting of a C1-C4 alkyl group, a C3-C8 cycloalkyl group, a C6-C10 aryl group, a halogen group, a nitro group (-NO₂), an amine group (-NH₂) and a sulfonyl group (-SO₂). According to an embodiment of the present disclosure, when the heterocyclic compound is substituted as mentioned above, radicals are stabilized to realize an advantageous effect in terms of inhibiting side reactions between the electrolyte ingredients. However, the scope of the present disclosure is not limited thereto.

Particular examples of the heterocyclic compound may include, but are not limited to: furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-metylthiophene, 2-ethylthiophene, 2-propylthiophene, 2-butylthiophene, 2,3-dimethylthiophene, 2,4-dimethylthiophene, 2,5-dimethylthiophene, or two or more of them.

According to an embodiment of the present disclosure, the nonaqueous solvent may include 2-methylfuran as a heterocyclic compound.

According to an embodiment of the present disclosure, the glycol ether may be present in an amount of 60 wt% or more, for example, 65 wt% or more, 70 wt% or more, 75 wt% or more, or 80 wt% or more, and 85 wt% or less, based on the total volume of the nonaqueous solvent, but is not limited thereto. When the amount of the glycol ether falls within the above-defined range, it is possible to provide an effect of providing suitable solubility to the lithium salt, nitrate salt, aryl derivative and lithium polysulfide eluted from the positive electrode during the operation of a battery, but the scope of the present disclosure is not limited thereto.

According to an embodiment of the present disclosure, the heterocyclic compound may occupy the volume other than the glycol ether based on the total volume of the nonaqueous solvent. For example, the heterocyclic compound may be present in an amount of 15 wt% or more, for example, 20 wt% or more, and 40 wt% or less, 35 wt% or less, 30 wt% or less, or 25 wt% or less, based on the total volume of the nonaqueous solvent, but is not limited thereto. When the amount of the heterocyclic compound falls within the above-defined range, it is possible to provide an effect of providing suitable solubility to the lithium salt, nitrate salt, aryl derivative and lithium polysulfide eluted from the positive electrode during the operation of a battery, but the scope of the present disclosure is not limited thereto.

According to another embodiment of the present disclosure, the ratio of the total volume of the glycol ether based on the total volume of the heterocyclic compound may be 3:1 or more. Particularly, the ratio of the total volume of the glycol ether based on the total volume of the heterocyclic compound may be 3:1-5:1, 3:1-4:1, or 3.5:1-4:1. When the ratio of the glycol ether to the heterocyclic compound falls within the above-defined range, there is an advantageous effect in terms of improvement of the operation stability of a battery, but the scope of the present disclosure is not limited thereto.

According to an embodiment of the present disclosure, the nonaqueous solvent may further include an acyclic ether containing one oxygen atom, in addition to the above-described heterocyclic compound and glycol ether. When the nonaqueous solvent further includes an acyclic ether, it is possible to provide an advantageous effect in terms of improvement of over-voltage at SOC70 during the operation of a battery, but the scope of the present disclosure is not limited thereto.

According to an embodiment of the present disclosure, the acyclic ether containing one oxygen atom may be represented by the following Chemical Formula 6:

[Chemical Formula 6] R⁹-O-R¹⁰

wherein each of R⁹ and R¹⁰ independently represents a substituted or non-substituted C1-C20 alkyl group.

According to an embodiment of the present disclosure, the 'substitution' in the substituted C1-C20 alkyl group may be made by a substituent, such as a halogen atom, a hydroxyl group, a nitro group, a cyano group, an amino group, an amidino group, an acetamino group, hydrazine, hydrazone, a carboxyl group, a sulfonyl group, a sulfamoyl group, a sulfonate group, phosphate, a C1-C5 alkyl group, a C1-C5 alkoxy group, a C2-C5 alkenyl group, a C2-C5 alkynyl group, a C4-C10 cycloalkyl group, a C6-C10 aryl group, a C6-C10 heteroaryl group, a C6-C20 arylalkyl group, a C6-C20 heteroarylalkyl group, or a combination thereof.

According to another embodiment of the present disclosure, each of R⁹ and R¹⁰ may independently represent a substituted or non-substituted C1-C20 alkyl group in terms of inhibiting side reactions with polysulfide or lithium during the operation of a battery.

According to still another embodiment of the present disclosure, each of R⁹ and R¹⁰ may independently represent a methyl group, a ethyl group, a n-propyl group, a n-butyl group, a n-amyl group, a n-hexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, a n-eicosanyl group, a iso-propyl group, a sec-butyl group, a iso-butyl group, a tert-butyl group, a 1-methylbutyl group, a 1-ethylpropyl group, a 2-methylbutyl group, a iso-amyl group, a neopentyl group, a 1,2-dimethylpropyl group, a 1,1-dimethylpropyl group, a tert-amyl group, a 1,3-dimethylbutyl group, a 3,3-dimethylbutyl group, a 2-ethylbutyl group, a 2-ethyl-2-methylpropyl group, a linear or branched heptyl group, a 1-methylheptyl group, a 2-ethylhexyl group, a 1,5-dimethylhexyl group, a tert-octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, a branched octadecyl group, a linear or branched nonadecyl group, a linear or branched eicosanyl group, a cyclopropyl group , a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexylpropyl group, a cyclododecyl group, a norbornyl group, a bornyl group, a cyclopentylethyl group or a bicyclooctyl group.

According to still another embodiment of the present disclosure, R⁹ may preferably represent a non-substituted alkyl group in terms of inhibiting side reactions with polysulfide or lithium during the operation of a battery, but the scope of the present disclosure is not limited thereto.

According to an embodiment of the present disclosure, for example, the acyclic ether may include bis(2,2,2-trifluoroethyl)ether, methyl propyl ether, ethyl propyl ether, dipropyl ether, methyl t-butyl ether, methyl hexyl ether, ethyl t-butyl ether, ethyl hexyl ether, or two or more of them.

According to an embodiment of the present disclosure, the above-described types of acyclic ethers may function as non-solvents for polysulfide eluted from the positive electrode to realize an advantageous effect in terms of inhibiting the elution of polysulfide from the positive electrode.

According to another embodiment of the present disclosure, the acyclic ether may be present in an amount of 10 vol% or less based on the total volume of the nonaqueous solvent, but is not limited thereto. Particularly, the content of the acyclic ether may be 1-10 vol%, or 5-10 vol%, based on the total volume of the nonaqueous solvent. When the content of the acyclic ether falls within the above-defined range, it is possible to provide an advantageous effect in terms of improvement of the operation stability of a battery, but the scope of the present disclosure is not limited thereto.

According to still another embodiment of the present disclosure, the acyclic ether may be present in an amount of 10 vol% or less based on the total volume of the nonaqueous solvent, and the ratio of the total volume of the glycol ether based on the total volume of the acyclic ether may be 6:1 or more, such as 6:1-7.5:1, or 6.5:1-7:1, but the scope of the present disclosure is not limited thereto.

According to an embodiment of the present disclosure, when the content of the above-mentioned solvent based on the total volume of the nonaqueous solvent falls within the above-defined range, it is possible to provide an advantageous effect in terms of inhibiting the elution of polysulfide and operation stability of a battery, but the scope of the present disclosure is not limited thereto.

The lithium salt is not particularly limited, as long as it may be used conventionally for an electrolyte of a lithium-sulfur battery. Particular examples of the lithium salt may include, but are not limited to: LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate, lithium tetraphenylborate, lithium imide, or two or more of them.

According to an embodiment of the present disclosure, the lithium salt may not include lithium nitrate. Lithium nitrate may be used as an example of nitrate salt.

According to an embodiment of the present disclosure, the lithium salt may include lithium bis(fluorosulfonyl)imide (LiFSI).

According to an embodiment of the present disclosure, the lithium salt concentration may be determined suitably considering the ion conductivity, solubility, or the like. For example, the lithium salt concentration may be 0.1-4.0 M, 0.5-2.0 M, 0.5-1.0 M, or 0.75 M. When the lithium salt concentration falls within the above-defined range, it is possible to realize an advantageous effect in terms of ion conductivity and electrolyte viscosity, but the scope of the present disclosure is not limited thereto.

According to another embodiment of the present disclosure, the electrolyte for a lithium-sulfur battery may further include other additives, besides the above-described ingredients, in order to improve charge/discharge characteristics, flame resistance, or the like. Such additives are not particularly limited, but particular examples of thereof may include pyridine, triethyl phosphite, triethanolamine, ethylene diamine, n-glyme, triamide hexaphosphate, nitrobenzene derivatives, sulfur, quinonimine dyes, N-substituted oxazolidinone, N,N-substituted imidazolidine, ammonium salts, pyrrole, 2-methoxyethanol, aluminum trichloride, fluoroethylene carbonate (FEC), propene sultone (PRS), vinylene carbonate (VC), or the like.

The electrolyte for a lithium-sulfur battery according to an embodiment of the present disclosure may be obtained by a conventional method known to those skilled in the art with no particular limitation.

**In** another aspect of the present disclosure, there is provided a lithium-sulfur battery including the above-described electrolyte for a lithium-sulfur battery, a positive electrode containing a positive electrode active material and a negative electrode containing a negative electrode active material. Particularly, the positive electrode active material includes elemental sulfur, sulfur compound or a mixture thereof.

Any positive electrode, positive electrode active material, negative electrode and negative electrode active material may be used with no particular limitation, as long as they may be used in a lithium-sulfur battery while not detracting from the objects of the present disclosure.

For example, the positive electrode may include a positive electrode current collector and a positive electrode active material layer coated on one surface or both surfaces of the positive electrode current collector, and the negative electrode may include a negative electrode current collector and a negative electrode active material layer coated on one surface or both surfaces of the negative electrode current collector, wherein the positive electrode current collector is not particularly limited, as long as it supports the positive electrode active material layer and has high conductivity while not causing any chemical change in the corresponding battery, and the negative electrode current collector is not particularly limited, as long as it supports the negative electrode active material layer and has high conductivity while not causing any chemical change in the corresponding battery.

According to an embodiment of the present disclosure, the positive electrode active material includes elemental sulfur, sulfur compound or a mixture thereof. Particularly, the positive electrode active material may include inorganic sulfur (S₈), Li₂Sₙ (n ≥ 1), disulfide compound, organic sulfur compound, carbon-sulfur polymer ((C₂Sₓ)ₙ, x represents an integer of 2.5-50, n ≥ 2), or a mixture of two or more of them.

According to an embodiment of the present disclosure, the negative electrode active material is not particularly limited and may include a material capable of reversible lithium (Li⁺) intercalation/deintercalation, or a material capable of reacting with lithium ions to form a lithium-containing compound reversibly. For example, the negative electrode active material may include lithium metal, lithium alloys or a mixture thereof. Particular examples of lithium alloys include alloys of lithium (Li) with sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), tin (Sn), or two or more of them.

In addition, each of the positive electrode active material layer and the negative electrode active material layer may further include a conductive material, a binder, an additive, or the like, besides the active material. Since such ingredients may be any conventional types of materials, detailed description thereof will be omitted herein.

According to an embodiment of the present disclosure, the outer shape of the lithium-sulfur battery may be selected from a coin-like shape, a cylindrical shape, a pouch-like shape or a prismatic shape with no particular limitation. In addition, the lithium-sulfur battery may be used not only for a battery cell used as a power source of a compact device but also for a unit cell in a middle- or large-scale battery module including a plurality of battery cells, and the application thereof is not particularly limited.

According to an embodiment of the present disclosure, the lithium-sulfur battery using a positive electrode including a sulfur-carbon composite can realize an excellent effect in terms of the energy density of the battery as well as initial capacity and cycle stability, but the effect of the present disclosure is not limited thereto.

According to an embodiment of the present disclosure, the lithium-sulfur battery can provide an effect of ensuring the amount of electrolyte to improve side reactions caused by polysulfide in the electrolyte, while increasing the energy density.

According to an embodiment of the present disclosure, the lithium-sulfur battery may have a ratio (E/S ratio), which is an electrolyte/sulfur (E/S) ratio of the weight of the electrolyte for a lithium-sulfur battery based on the weight of sulfur as a positive electrode active material, of 2 g/g or more. Particularly, the electrolyte/sulfur (E/S) ratio may be 2.3 g/g or more. For example, the electrolyte/sulfur (E/S) ratio may be 2-3 g/g, 2.1-2.7 g/g, or 2.3-2.5 g/g. To solve the problem of the related art, i.e. side reactions caused by a high concentration of polysulfide in an electrolyte derived from a reduced E/S ratio for providing increased energy density, the present disclosure is directed to providing an effect of stabilizing an E/S ratio, while increasing the energy density of a battery. Therefore, the lithium-sulfur battery may have an E/S ratio larger than the above-defined range, and it is apparent to those skilled in the art that the upper limit of the range is not particularly limited. Also, the scope of the present disclosure is not limited thereto.

According to another embodiment of the present disclosure, the lithium-sulfur battery may have an energy density of 400-500 Wh/kg. Particularly, the lithium-sulfur battery may have an energy density of 430 Wh/kg or more, 450 Wh/kg or more, or 460 Wh/kg or more, but the scope of the present disclosure is not limited thereto.

### MODE FOR DISCLOSURE

Hereinafter, the present disclosure will be explained in more detail with reference to Examples. However, the following Examples are for illustrative purposes only, and the scope of the present disclosure is not limited thereto.

First, a pouch cell-type lithium-sulfur battery was obtained as follows, and the performance of the resultant battery was evaluated.

### Test Example 1: Evaluation of Battery Performance Depending on Addition of PDSe

### [Manufacture of Battery]

### Example 1

### Preparation of Electrolyte for Lithium-Sulfur Battery

First, 0.5 M lithium bis(fluorosulfonyl)imide (LiFSI), 4.0 wt% of lithium nitrate (LiNO₃, molar mass 69 g/mol) and 1 wt% of diphenyl diselenide (PDSe, molar mass 312 g/mol) were introduced to a mixture (v/v/v = 7:2:1) of dimethoxyethane (DME), 2-methylfuran (2MeF) and bis(2,2,2-trifluoroethyl)ether (BTFE), and the resultant mixture was agitated for 12 hours to prepare an electrolyte.

### Preparation of Electrode

A sulfur-carbon composite (S:C = 70:30 (weight ratio)) as a positive electrode active material and polyacrylic acid (PAA) as a binder were mixed at a weight ratio of 97:3 in distilled water as a solvent to prepare a positive electrode slurry.

The resultant positive electrode slurry composition was applied to both surfaces of an aluminum current collector having a thickness of 12 µm, dried at 80°C and pressed by using a roll press machine to obtain a positive electrode. Herein, the positive electrode active material loading amount was 3.45 mAh/cm².

Lithium metal having a thickness of 30 µm was prepared as a negative electrode.

### Manufacture of Lithium-Sulfur Battery

The positive electrode and the negative electrode prepared as described above were positioned in such a manner that they might face each other and stacked with a polyethylene separator (thickness 16 µm, porosity 68%) inserted between both electrodes to assemble a pouch cell, and 1 g of the electrolyte prepared as described above was injected thereto to an E/S (electrolyte/S loading amount) ratio of 2.15 g/g, followed by sealing, to obtain a pouch-type lithium-sulfur battery.

### Example 2

A lithium-sulfur battery was obtained in the same manner as Example 1, except that 3 wt% of PDSe was added.

### Example 3

A lithium-sulfur battery was obtained in the same manner as Example 1, except that 5 wt% of PDSe was added.

### Comparative Example 1

A lithium-sulfur battery was obtained in the same manner as Example 1, except that no PDSe was added.

**[Table 1]**

| | E/S | Solvent volume ratio (v/v/v) | | | Lithium salt (M) | Nitrate salt (wt%) | Aryl derivative (wt%) | Molar ratio of aryl derivative: nitrate salt |
|---|---|---|---|---|---|---|---|---|
| | | 2MeF | BTFE | DME | LiFSI | LiNO₃ | PDSe | |
| Comp. Ex. 1 | 2.15 | 20 | 10 | 70 | 0.5 | 4 | - | - |
| Ex. 1 | 2.15 | 20 | 10 | 70 | 0.5 | 4 | 1 | 0.05 |
| Ex. 2 | 2.15 | 20 | 10 | 70 | 0.5 | 4 | 3 | 0.17 |
| Ex. 3 | 2.15 | 20 | 10 | 70 | 0.5 | 4 | 5 | 0.28 |

### [Evaluation of Battery Performance and Results]

The performance of each battery was evaluated as follows. The results are shown in the following Table 2.

### Evaluation of Initial Discharge Capacity

Each battery was allowed to operate three times at a temperature of 25°C under the condition of 0.1 C charge/0.1 C discharge (cutoff voltage 2.5 V/1.8 V) to determine the initial discharge capacity.

### Determination of Energy Density

The energy density of each cell was calculated by multiplying the initial discharge capacity (Ah) of each cell by the average operation voltage (V), followed by division by the cell weight (kg).

### Evaluation of Life

After evaluating the initial discharge capacity, each battery was allowed to operate repeatedly at 25°C under the condition of 0.2 C charge/0.1 C discharge (cutoff voltage 2.5 V/1.8 V). Then, the cycle number when the energy density of the battery reached 400 Wh/kg was checked to determine the life characteristics of the battery.

**[Table 2]**

| | Capacity (mAh/g) | Energy density (Wh/kg) | Life (cyc) |
|---|---|---|---|
| Comp. Ex. 1 | 1138 | 445 | 31 |
| Ex. 1 | 1157 | 457 | 32 |
| Ex. 2 | 1238 | 487 | 30 |
| Ex. 3 | 1245 | 489 | 22 |

As can be seen from Table 1 and Table 2, when the E/S ratio is 2.15, the energy density is improved by the addition of PDSe.

### Test Example 2: Evaluation of Battery Performance Depending on Molar Ratio of Additive and E/S Ratio (1)

Each battery was obtained by using the composition as shown in the following Table 3 in the same manner as Example 1, and the battery performance was evaluated in the same manner as described above. The results are shown in the following Table 4. For the purpose of comparison in terms of composition and performance, the test result of Example 1 is also shown.

**[Table 3]**

| | E/S | Solvent volume ratio (v/v/v) | | | Lithium salt (M) | Nitrate salt (wt%) | Aryl derivative (wt%) | Molar ratio of aryl derivative: nitrate salt |
|---|---|---|---|---|---|---|---|---|
| | | 2MeF | BTFE | DME | LiFSI | LiNO₃ | PDSe | |
| Ex. 1 | 2.15 | 20 | 10 | 70 | 0.5 | 4 | 1 | 0.05 |
| Ex. 4 | 2.3 | 20 | 10 | 70 | 0.5 | 4 | 1 | 0.05 |
| Ex. 5 | 2.5 | 20 | 10 | 70 | 0.5 | 4 | 1 | 0.05 |
| Ex. 6 | 2.3 | 20 | 10 | 70 | 0.5 | 4 | 3 | 0.17 |
| Ex. 7 | 2.5 | 20 | 10 | 70 | 0.5 | 4 | 3 | 0.17 |

**[Table 4]**

| | Capacity (mAh/g) | Energy density (Wh/kg) | Life (cyc) |
|---|---|---|---|
| Ex. 1 | 1157 | 457 | 32 |
| Ex. 4 | 1165 | 451 | 38 |
| Ex. 5 | 1174 | 440 | 49 |
| Ex. 6 | 1193 | 462 | 35 |
| Ex. 7 | 1213 | 452 | 42 |

As can be seen from Table 3 and Table 4, when the E/S ratio is 2.3 or more, the life characteristics of the battery as well as the initial capacity and energy density thereof are improved by the addition of PDSe. In addition, it can be seen that when the E/S ratio is 2.3 or more, a molar ratio of the aryl derivative to the nitrate salt of 0.1 or less provides further improvement of the battery performance.

### Test Example 3: Evaluation of Battery Performance Depending on Molar Ratio of Additive and E/S Ratio (2)

Each battery was obtained by using the composition as shown in the following Table 5 in the same manner as Example 1, except that BTFE was not used as a nonaqueous solvent and 2MeF and DME were used at a volume ratio of 20:80 (2MeF:DME), and the battery performance was evaluated in the same manner as described above. The results are shown in the following Table 6.

**[Table 5]**

| | E/S | Solvent volume ratio (v/v) | | Lithium salt (M) | Nitrate salt (wt%) | Aryl derivative (wt%) | Molar ratio of aryl derivative:n itrate salt |
|---|---|---|---|---|---|---|---|
| | | 2MeF | DME | LiFSI | LiNO₃ | PDSe | |
| Comp. Ex. 2 | 2.5 | 20 | 80 | 0.5 | 4 | - | 0.05 |
| Ex. 8 | 2.5 | 20 | 80 | 0.5 | 4 | 3 | 0.17 |
| Ex. 9 | 2.7 | 20 | 80 | 0.5 | 4 | 3 | 0.17 |
| Ex. 10 | 3.0 | 20 | 80 | 0.5 | 4 | 3 | 0.17 |
| Ex. 11 | 2.5 | 20 | 80 | 0.5 | 5 | 3 | 0.13 |
| Ex. 12 | 2.5 | 20 | 80 | 0.5 | 6 | 3 | 0.11 |

**[Table 6]**

| | Capacity (mAh/g) | Energy density (Wh/kg) |
|---|---|---|
| Comp. Ex. 2 | 1221 | 454 |
| Ex. 8 | 1252 | 464 |
| Ex. 9 | 1266 | 454 |
| Ex. 10 | 1298 | 440 |
| Ex. 11 | 1249 | 461 |
| Ex. 12 | 1273 | 472 |

As can be seen from Table 5 and Table 6, when the E/S ratio is 2.5 or more, the capacity and energy density of the battery are still improved by the addition of PDSe.

## Claims

1. An electrolyte for a lithium-sulfur battery, comprising a nonaqueous solvent, a lithium salt, a nitrate salt and an aryl derivative,
wherein the nonaqueous solvent comprises: a heterocyclic compound containing one oxygen (O) atom or sulfur (S) atom in its cyclic structure; and glycol ether, and
the aryl derivative comprises at least one of the compounds represented by the following Chemical Formula 1 to Chemical Formula 4:
[Chemical Formula 1] R¹-M₁-Li
[Chemical Formula 2] R²-M₂-M₃-R³
[Chemical Formula 3] R⁴-M₄-Sx-Li
[Chemical Formula 4] R⁵-M₅-Sx-M₆-R⁶,
wherein each of M₁, M₂, M₃, M₄, M₅ and M₆ is independently selected from selenium (Se) and tellurium (Te),
each of R¹, R², R³, R⁴, R⁵ and R⁶ independently represents a C6-C20 aryl group, and
X represents a number of 1-8.

2. The electrolyte for a lithium-sulfur battery according to claim 1, wherein each of M₁, M₂, M₃, M₄, M₅ and M₆ in Chemical Formula 1 to Chemical Formula 4 represents selenium (Se).

3. The electrolyte for a lithium-sulfur battery according to claim 1, wherein the nitrate salt comprises an alkali metal as a cation.

4. The electrolyte for a lithium-sulfur battery according to claim 3, wherein the nitrate salt comprises lithium nitrate (LiNO₃).

5. The electrolyte for a lithium-sulfur battery according to claim 1, wherein the sum of the weight of the nitrate salt and the weight of the aryl derivative is 4 wt% or more based on the total weight of the electrolyte for a lithium-sulfur battery.

6. The electrolyte for a lithium-sulfur battery according to claim 1, wherein the weight of the aryl derivative is equal to or smaller than the weight of the nitrate salt.

7. The electrolyte for a lithium-sulfur battery according to claim 1, wherein the aryl derivative comprises a compound represented by Chemical Formula 1, a compound represented by Chemical Formula 3 or a mixture thereof, and
the molar ratio of the compound represented by Chemical Formula 1, the compound represented by Chemical Formula 3 or a mixture thereof based on the nitrate salt is 0.5:1 or less.

8. The electrolyte for a lithium-sulfur battery according to claim 1, wherein the aryl derivative comprises a compound represented by Chemical Formula 2, a compound represented by Chemical Formula 4 or a mixture thereof, and
the molar ratio of the compound represented by Chemical Formula 2, the compound represented by Chemical Formula 4 or a mixture thereof based on the nitrate salt is 0.2:1 or less.

9. The electrolyte for a lithium-sulfur battery according to claim 1, wherein the lithium salt comprises LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate, lithium tetraphenylborate, lithium imide, or two or more of them.

10. The electrolyte for a lithium-sulfur battery according to claim 1, wherein the ratio of the total volume of the glycol ether based on the total volume of the heterocyclic compound is 3:1 or more.

11. The electrolyte for a lithium-sulfur battery according to claim 1, wherein the heterocyclic compound comprises furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-metylthiophene, 2-ethylthiophene, 2-propylthiophene, 2-butylthiophene, 2,3-dimethylthiophene, 2,4-dimethylthiophene, 2,5-dimethylthiophene, or two or more of them.

12. **The** electrolyte for a lithium-sulfur battery according to claim 1, wherein the nonaqueous solvent further comprises an acyclic ether containing one oxygen atom.

13. The electrolyte for a lithium-sulfur battery according to claim 12, wherein the acyclic ether is present in an amount of 10 vol% or less based on the total volume of the nonaqueous solvent.

14. The electrolyte for a lithium-sulfur battery according to claim 12, wherein the acyclic ether comprises bis(2,2,2-trifluoroethyl)ether, methyl propyl ether, ethyl propyl ether, dipropyl ether, methyl t-butyl ether, methyl hexyl ether, ethyl t-butyl ether, ethyl hexyl ether, or two or more of them.

15. A lithium-sulfur battery which comprises:
the electrolyte for a lithium-sulfur battery as defined in any one of claims 1 to 13;
a positive electrode comprising a positive electrode active material; and
a negative electrode comprising a negative electrode active material,
wherein the positive electrode active material comprises elemental sulfur, sulfur compound or a mixture thereof.

16. The lithium-sulfur battery according to claim 15, wherein the positive electrode active material comprises inorganic sulfur (S₈), Li₂Sₙ (n ≥ 1), disulfide compound, organic sulfur compound, carbon-sulfur polymer ((C₂Sₓ)ₙ, x represents an integer of 2.5-50, n ≥ 2), or a mixture of two or more of them.

17. The lithium-sulfur battery according to claim 15, wherein the ratio (E/S ratio) of the weight of the electrolyte for a lithium-sulfur battery based on the weight of the positive electrode active material is 2 g/g or more.

18. The lithium-sulfur battery according to claim 17, wherein the E/S ratio is 2.3 g/g or more.
